# EUROPEAN PATENT APPLICATION

(11) **EP 2 288 193 A1**
(43) Date of publication of application: **23.02.2011**
(21) Application number: 09765375.2
(22) Date of filing: 10.06.2009
(51) Int. Cl.: H04W 12/00

(54) **METHOD AND APPARATUS FOR CREATING AND DEPLOYING SERVICE**

(30) Priority: 16.06.2008 CN 200810125222
(71) Applicant: Huawei Technologies Co., Ltd., Longgang District, Shenzhen Guangdong 518129 (CN)
(72) Inventor: CHEN, Weiliang, Guangdong 518129 (CN); SHI, Xiaomin, Guangdong 518129 (CN); MA, Qifeng, Guangdong 518129 (CN); TANG, Jie, Guangdong 518129 (CN); CHANG, Heng, Guangdong 518129 (CN); WANG, Huan, Guangdong 518129 (CN); LI, Yan, Guangdong 518129 (CN)
(74) Representative: Körber, Martin Hans
(86) International application number: PCT/CN2009/072201
(87) International publication number: WO 2009/152736

(57) **Abstract**

A method for creating a service includes: acquiring, by an authority editor, a group ID of a service creator from a group management server, and setting service access authority information for the group ID; and storing the service access authority information in a service description file as a part of the service description file. Through the method, the service creator can preset the service access authority by himself/herself, which meets the new requirements imposed by numerous service types and numerous service users at present. Thus, the system administrator is relieved from the complex and heavy service authority setting work, so that the efficiency of service delivery and operation is improved.

## Description

The application claims priority to Chinese Patent Application No. 200810125222.0, filed on June 16, 2008, and entitled "METHOD AND DEVICE FOR CREATING AND DEPLOYING SERVICE", which is incorporated herein by reference in its entirety.

### FIELD OF THE TECHNOLOGY

The present invention relates to the field of communications technologies, and more particularly to a method and device for creating and deploying a service.

### BACKGROUND OF THE INVENTION

The development and creation of traditional telecommunication services is often carried out in a relatively closed system, for example, conducted in the service development of intelligent networks, and can only be conducted by professional developers familiar with intelligent network protocols. With the development of technologies, Open Service Architecture (OSA)/Parlay proposes an open service architecture specification, through which interface third-party service developers can develop relevant telecommunication services. Since the Parlay specification is complex, no desired effect is achieved in fact. However, as the number of telecommunication service users increases, the requirements imposed on telecommunication services are mainly with regard to rapid creation and deployment as well as diversity.

In order to address the urgent need of rapid service creation, the concepts of service combination technology and service convergence are proposed in the industry. These technologies can combine services from different sources to form a new service with a unified and integrated experience, and at present, the technology has become a trend of rapid service creation. Through creating services by combination, not only some of telecommunication infrastructure services can be reused, but also the time required for creating and deploying new services can be shortened. Meanwhile, by enabling service users to directly participate in the service creation, services are made more personalized and diversified.

For the access process of the service combination, the access authority of a visitor needs to be controlled. In a first prior art, the access authority is described by using a metafile, with the content authority being set by an administrator. Its technical objective is to exercise access control based on contents (such as files and images), rather than based on services created by service users themselves.

Another prior art enables the service user to exercise access control, and is specifically described as follows.

A system of service access strategy can be controlled by a service user through a terminal, and the service user can require in the service access strategy that other service users pass an authentication by the service user when accessing the service. The main principle lies in that, the service user is enabled to flexibly control the access strategy in the process of using of the service, rather than fix the access strategy when the service is implemented.

To sum up, the second prior art has at least the following problems.

In the second prior art, a service user can perform service access as long as the service user passes the authentication in advance when accessing the service, but the service access control cannot be exercised in the process of using the service.

### SUMMARY OF THE INVENTION

Accordingly, the present invention is directed to a method and device for creating and deploying a service, which aim to control access of a service user to a service with a corresponding service authority when the service user performs service access.

In order to solve the above problems, an embodiment of the present invention provides a method for creating a service, which includes:
setting service access authority information for a service user; and
storing the service access authority information in a service description file as a part of the service description file.

An embodiment of the present invention further provides a method for deploying a service, which includes:
acquiring a service description file, and extracting service access authority information from the service description file, where the service access authority information is used for representing a service access authority of a service user; and
deploying the service access authority information onto an access controller.

An embodiment of the present invention further provides a device for creating a service, which includes an authority editor and a service warehouse, where:
the authority editor is configured to set service access authority information for a service user; and
the service warehouse is configured to store the service access authority information in a service description file as a part of the service description file.

In an embodiment, the present invention further provides a device for deploying a service, which includes a service deployer and an access controller, where:
the service deployer is configured to acquire a service description file from a service warehouse, and extract service access authority information from the service description file, where the service access authority information is used for representing a service access authority of a service user; and
the access controller is configured to accept the service authority information deployed by the service deployer.

Compared with the prior art, the embodiments of the present invention have the following advantages.

Through the embodiments of the present invention, after a service access request from a visitor is received, a preset service authority of the visitor is acquired; if the visitor is authorized to access, the service access request of the visitor is accepted; otherwise, the service access request of the visitor is rejected. Thus, the following effects are achieved.

Firstly, the service access authority is preset by a service creator himself/herself, rather than by the system administrator as in the prior art.

Secondly, since the service access authority is preset by the service creator, the new requirements imposed by numerous service types and numerous service users at present are met.

Thirdly, the system administrator is relieved from the complex and heavy service authority setting work, so that the efficiency of service delivery and operation is improved.

Finally, the creation of the service access authority by the service creator himself/herself helps to protect the personal privacy of the combined service creator, and can attract more service users, thereby promoting the development of the service combination technology.

To sum up, the embodiments of the present invention typically feature in that, the service authority is set by the service user creating the service, so that the authority of other visitors to access a corresponding service can be edited and set when the service is created, and the access control authority can be automatically deployed onto the access controller of a service platform, rather than controlling the access strategy in the process of using the service.

### BRIEF DESCRIPTION OF THE DRAWINGS

FIG. 1 is a detailed principle block diagram of exercising, by a visitor of a service, control over service access according to the present invention;
FIG. 2 is a signaling flowchart of a service authority creation and storage process according to the present invention;
FIG. 3 is a signaling flowchart of a service authority template storage process according to the present invention;
FIG. 4 is a signaling flowchart of a service authority template extraction process according to the present invention;
FIG. 5 is a flowchart of a service authority deployment process according to the present invention;
FIG. 6 is a flowchart of a service authority execution process according to the present invention;
FIG. 7 is a flowchart of Embodiment 1 of a method for creating a service according to the present invention; and
FIG. 8 is a flowchart of Embodiment 1 of a method for deploying a service according to the present invention.

### DETAILED DESCRIPTION OF THE EMBODIMENTS

Specific embodiments of the present invention are described in further detail in the following with reference to the accompanying drawings.

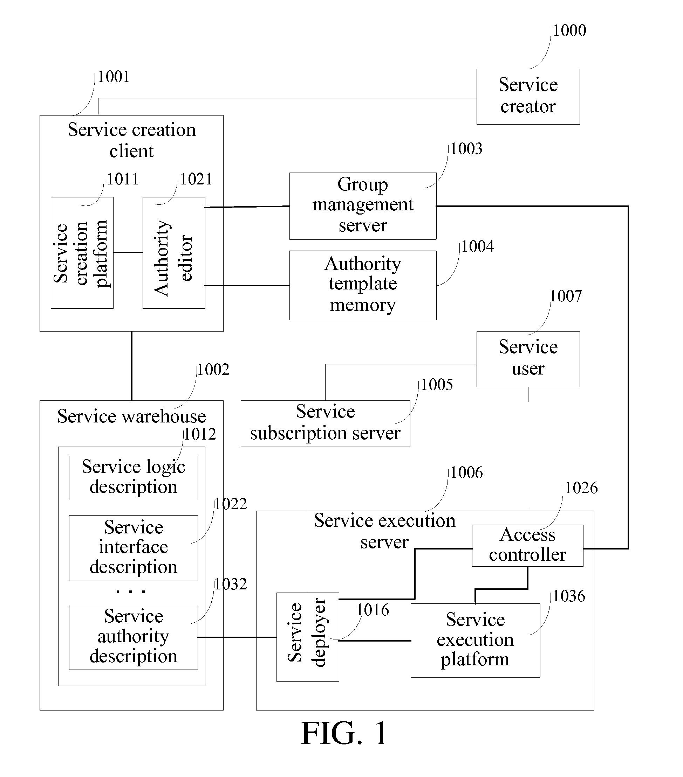

FIG. 1 is a detailed principle block diagram of exercising, by a visitor of a service, control over service access according to the present invention.

Service platforms of the present invention are illustrated in detail in the following with reference to FIG. 1.

### 1. Service creation platform

A service creation platform refers to a software environment used by a service creator to create combined services, and a service user can acquire various service components in the service creation platform to create new services by combining necessary service components. The service creation platform often expresses the service components intuitively by using graphical expressions (for example, a square block diagram represents a service component), and the service user implements the service creation process by interconnecting, matching and editing these graphics. There are also some platforms with limited functions (such as a service creation platform on a mobile phone), where these platforms express a service in the form of text, and the service user needs to implement the service creation process by editing a service combination process.

In the service creation platform, the service created by the service user is expressed in the form of a service description file. The service description file is generally an Extensible Markup Language (XML) document, which describes the service from different aspects. For example, the service description file may include information such as a service logic description, a service interface description and a semantic description.

In the process of editing a service using the service creation platform, the service user may invoke an authority editor at any time to set a service authority for the created service function.

### 2. Authority editor

In the process of editing the service by the service user using the service creation platform, the service user may need to set an access authority for the service function, for example, different groups of service users have different service authorities. The function of the authority editor is to provide the service user with authority information required for editing the service authority, and the service user may set different access authorities for different groups for the created service function. For example, the service user creates a personal calendar service, the calendar contains plans and schedules of the service user, and the service user may authorize a group of relatives to view and edit the calendar, authorize a group of friends to view but not to edit the calendar, and not authorize a group of strangers to view or edit the calendar. The authorities of the relatives, friends and strangers can be managed by using a group management server.

**Table 1 Service authority list**

| **Group ID** | **Service authority (personal calendar)** |
|---|---|
| Relatives | View & Edit |
| Friends | View & Not Edit |
| Strangers | Not View & Not Edit |

During setting the service authority, the authority editor needs to be connected to the group management server, so as to obtain the group ID required by the service user.

### 3. Group management server

The group management server manages group information of the service user, which can be set by the service user through corresponding client software or other methods, and the group management server uses the group information that has been set by the service user. In the present invention, group management is expressed as shown in the following table.

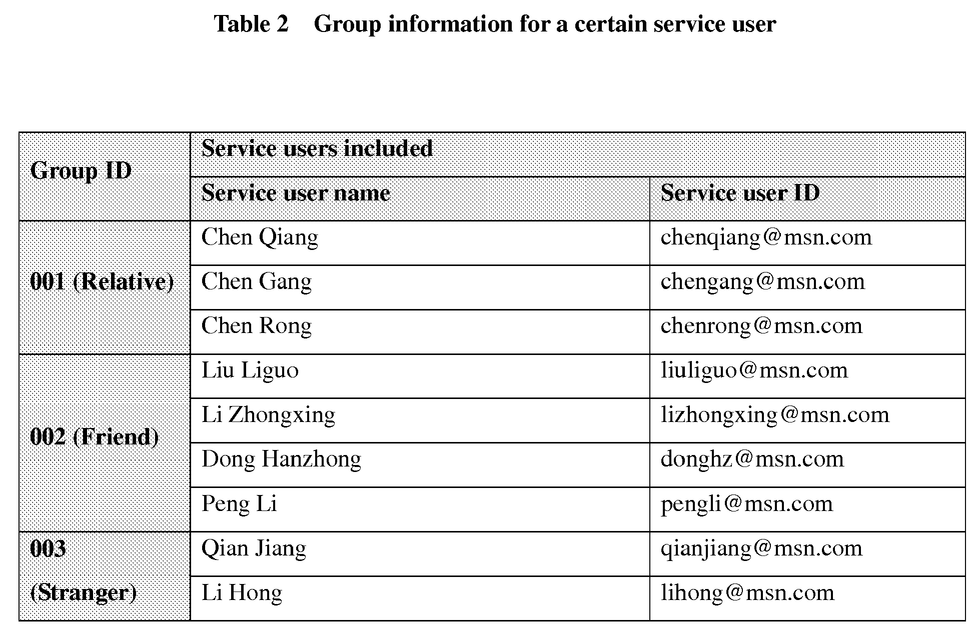

In the present invention, besides the group information defined by himself/herself, the service user may also acquire IDs of public groups (which can be viewed and used by any service user) during setting the service authority if the public groups exist on the group management server, and set service authorities for these public groups.

### 4. Authority template memory

On a service creation platform on which a service creator can create services, the service creator may create a lot of combined services. Accordingly, it will be rather inconvenient for the service creator if the service authority need to be edited from the beginning each time a service is created. If templates are adopted to store the service authority set by the service creator, a lot of repetitive work can be avoided. The function of the authority template memory is to store service authority templates, so as to support the utilization of templates to avoid repetitive work of authority setting.

The service creator may store the service authority set when the service is created as an authority template, and may also extract and edit a desired authority template from the authority template memory, and store the edited authority template as a new authority template.

### 5. Service warehouse

A service warehouse is configured to store service descriptions of various services. The service description is used for describing service-related information from various aspects, such as service logic, service interface, service configuration, and service management. In the present invention, the service warehouse does not store the service itself, but is only configured to store the service description. In the present invention, an access authority description of the service is added into the service description, and the access authority description is formed when the service user uses the authority editor, and is stored in the service warehouse as a part of the service description.

### 6. Service deployer

Service deployment refers to the configuration of various service and system parameters performed in order to enable the service to operate effectively after the service is created. After the service deployer deploys the service, the service should be able to operate effectively. In the present invention, the service deployer firstly obtains a service authority description containing service authority information from the service warehouse. The present invention merely focuses on the deployment of the service authority information. After obtaining the service authority information, the service deployer automatically deploys the service authority set by the service user onto the access controller according to the service authority information.

### 7. Access controller

The function of the access controller is to control the access authority of a service user to a service according to a set access strategy. The access controller is similar to a firewall in an Internet Protocol (IP) network, and is generally deployed at the front end of a service operation platform. When a service is deployed, a corresponding service access strategy needs to be deployed in the access controller. Conventionally, the service access strategy is edited and deployed manually, but in the present invention, the service access strategy is automatically deployed in the access controller by the service deployer after acquiring service authority description information (i.e., the service access strategy). After the service is deployed and operated, the service user firstly subscribes to the desired service, and then, before the service user accesses the service, the service authority of the service user needs to be controlled by the access controller.

### 8. Service subscriber

After the service is operated by a service execution platform, the service user needs to subscribe to the service through the service subscriber, which involves the function of subscription, accounting and other processes. The service user must subscribe to the service in order to access the service.

### 9. Service execution platform

A service execution platform is the operating environment of a service, and in the field of telecommunication, conventional intelligent networks, OSA/Parlay servers and IMS application servers all include the service execution platform.

Based on the above introduction, the working process in the embodiments of the present invention is introduced in the following through detailed service processes.

### (1) Service authority creation and storage process

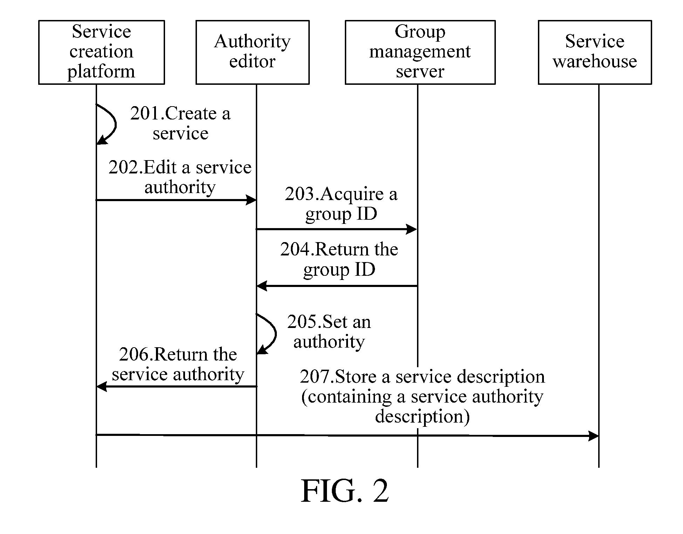

FIG. 2 is a signaling flowchart of a service authority creation and storage process according to the present invention, which includes the following steps.

Step 201: A service creator creates a combined service by using a service creation platform, where the created service exists in the form of a service description file, and the service description file includes a service logic description, a service interface description and the like.

Step 202: The service creator triggers an authority editor in the service creation platform to edit a service authority description. In the present invention, the service authority description is XML-based description information.

Step 203: In the process of editing the service authority through the authority editor, a group ID of a service user needs to be acquired from a group management server to identify a certain group.

Step 204: The group management server returns the group ID to the authority editor.

Step 205: The service creator may set a corresponding service authority for the acquired group ID, or may also directly set a service authority for the service user ID.

Step 206: The authority editor returns the authority description set by the service creator to the service creation platform, and the service creation platform incorporates the service authority description into the service description file to form a complete service description file.

Step 207: After the service creator edits the service, the service creation platform stores the complete service description file (which contains the service authority description) into a service warehouse.

### (2) Service authority template storage process

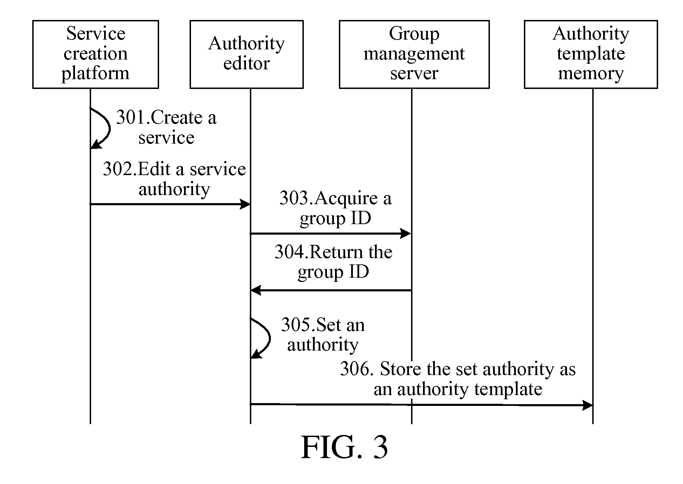

FIG. 3 is a signaling flowchart of a service authority template storage process according to the present invention, which includes the following steps.

Step 301: A service creator creates a combined service by using a service creation platform, where the created service exists in the form of a service description file, and the service description file includes a service logic description, a service interface description and the like.

Step 302: The service creator triggers an authority editor in the service creation platform to edit a service authority description. In the present invention, the service authority description is XML-based description information.

Step 303: In the process of editing the service authority through the authority editor, a group ID of a service user needs to be acquired from a group management server to identify a certain group.

Step 304: The group management server returns the group ID to the authority editor.

Step 305: The service creator may set a corresponding service authority for the acquired group ID, or may also directly set a service authority for the service user ID.

Step 306: In this embodiment, the service creator may also store the set service authorities as authority templates, and the authority templates are distinguished from each other by different authority template names.

### (3) Service authority template extraction process

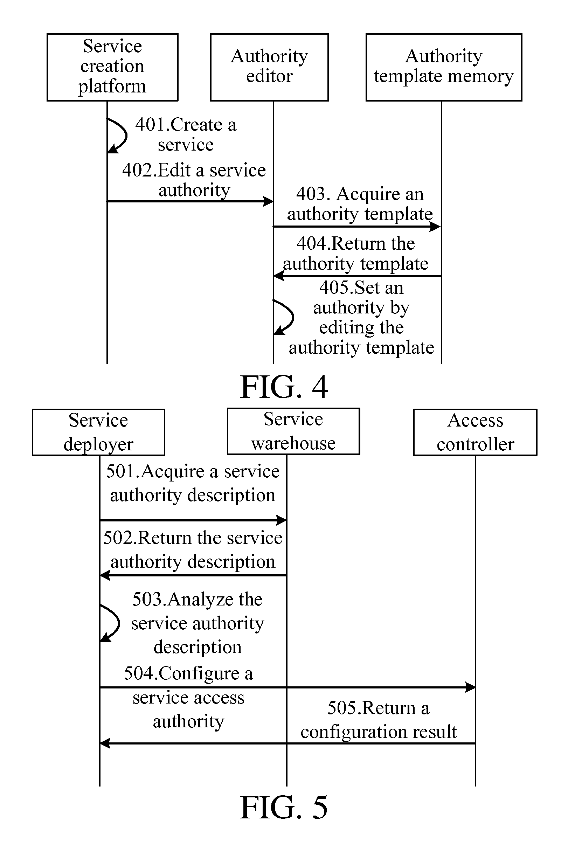

FIG. 4 is a signaling flowchart of a service authority template extraction process according to the present invention, which includes the following steps.

Step 401: A service creator creates a combined service by using a service creation platform, where the created service exists in the form of a service description file, and the service description file includes a service logic description, a service interface description and the like.

Step 402: The service creator triggers an authority editor in the service creation platform to edit a service authority description. In the present invention, the service authority description is XML-based description information.

Step 403: The service creator sends an authority template acquisition request to an authority template memory.

Step 404: The authority template memory returns authority template information.

Step 405: The service creator may directly use the authority templates, or may also edit and update the acquired authority templates to finish the setting of the service authority.

### (4) Service authority deployment process

FIG. 5 is a flowchart of a service authority deployment process according to the present invention, which includes the following steps.

Step 501: A service deployer sends a service authority description acquisition request to a service warehouse.

Step 502: The service warehouse extracts the service authority description of the service from a service description file, and returns the service authority description to the service deployer.

Step 503: The service deployer analyzes the service authority description, extracts corresponding service authorities of groups there-from, and sets the service authorities into a service authority format thereof.

Step 504: The service deployer configures information about the service authority format of the service deployer into an access controller.

Step 505: The access controller returns a configuration result of the service authority.

### (5) Service authority execution process

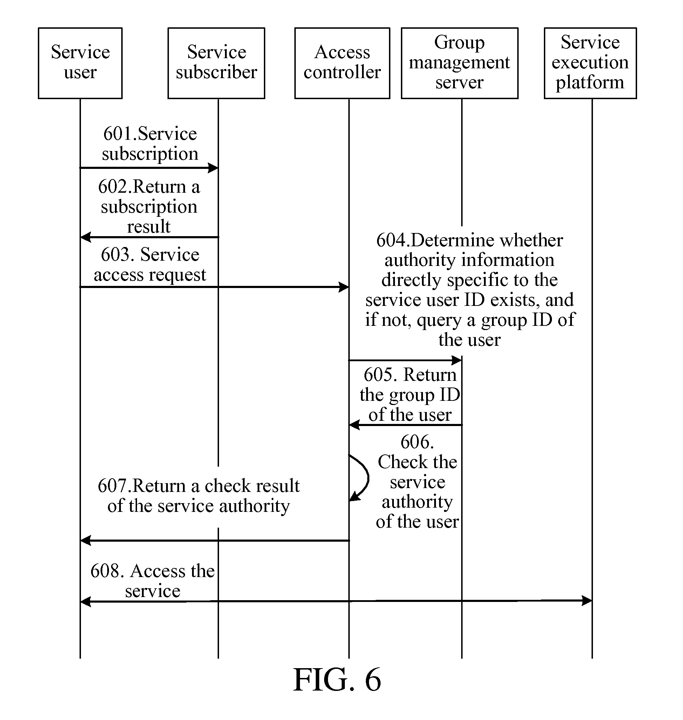

FIG. 6 is a flowchart of a service authority execution process according to the present invention, which includes the following steps.

Step 601: A service user sends a service subscription request to a service subscriber.

Step 602: The service subscriber returns a service subscription result to the service user.

Step 603: The service user needs to send a service access request to an access controller before accessing the service, and the access controller determines whether the service user has an access authority to the service.

Step 604: After the access controller receives the service access request, the access controller firstly extracts the service user ID, and checks whether authority information directly specific to the service user ID exists in the deployed service authorities. If authority information directly specific to the service user ID exists in the deployed service authorities, step 607 is performed; otherwise, a group ID of the service user is queried from a group management server.

Step 605: The group management server returns the group ID of the service user to the access controller.

Step 606: According to the group ID of the service user, the access controller checks the service authority of the service user according to the deployed service access authority information.

Step 607: The access controller returns a check result of the service authority of the service user to the service user.

Step 608: The service user starts to access the service operated on a service execution platform if the check result of the access controller permits the service user to access the service.

The implementation process of the technical solution of the present invention is introduced in the following with specific application scenarios.

### 2.1 Application Embodiment 1 of the present invention

A service creation platform is provided, through which any service creator can create various combined services. A service creator A creates a personal calendar sharing service in the service creation platform. The personal calendar sharing service is a combined service, and is combined by a calendar service and a short message service, where the calendar service is used for storing daily arrangement or schedule information of the service creator, and the short message service is used for sending a short message notification to a target service user. By using the personal calendar sharing service, the service creator can view and edit daily schedules, and can notify the updated schedules to the target service user if the schedules are updated.

### 2.1.1 Edition of service authorities

After creating the personal calendar sharing service on the service creation platform, the service creator A expects that different service users have different use authorities when the service is deployed onto the service execution platform and operated. The service creator A expects that family members can view and edit his/her personal schedules, friends can only view but cannot edit his/her personal schedules, and other strangers can neither view nor edit his/her personal schedules, as shown in the following table.

**Table 3**

| **Group** | **Service acces authority (personal calendar sharing service)** |
|---|---|
| Family members | View & Edit |
| Friends | View & Not Edit |
| Strangers | Not View & Not Edit |

For this purpose, at this point, the service creator A edits the authority information for the service through the authority editor. The authority editor obtains all the group information stored by the service creator A from the group management server, as shown in the following table.

**Table 4**

| **Group** | **Group ID** |
|---|---|
| Family members | 001 |
| Friends | 002 |
| Strangers | 003 |

The service creator gives different service authorities to different group IDs.

**Table 5**

| **Group ID** | **Service access authority (personal calendar sharing service)** |
|---|---|
| 001 | View & Edit |
| 002 | View & Not Edit |
| 003 | Not View & Not Edit |

After setting the service access authorities, the service creator stores the service into the service warehouse in the form of a service description file. The service description file is similar to the following XML file:

```
        <ServiceDescription serviceName="CalendarSharing">
              <ServiceLogicFacet>...</ServiceLogicFacet>
             <ServiceInterfaceFacet>...</Service InterfaceFacet>
              <ServiceProvisioningFacet>...</ ServiceProvisioningFacet>
              <ServiceAccessControlFacet>
                   <Group ID = 001>
                <Authorization>View & Edit</Authorization>
                   </Group>
                   <Group ID = 002>
                <Authorization>View & Not Edit</Authorization>
                   </Group>
                   <Group ID = 003>
                <Authorization>Not View & Not Edit</Authorization>
                   </Group>
              </ServiceAccessControlFacet>
        </ServiceDescription>
```

### 2.1.2 Storage of authority templates

After editing a service authority of the personal calendar sharing service, the service creator A expects that the service authority can be reused in the future, so as to avoid the problem that the service authority needs to be set from the beginning each time a service is created. The service creator A stores the service authority into an authority template memory as a template, and names the template as MyAccessControlTemplate.xml, as shown in the following.

```
        <?xml version="1.0" encoding="UTF-8"?>
        <AccessControlTemplate>
              <Group ID = 001>
               <Authorization>View & Edit</Authorization>
              </Group>
              <Group ID = 002>
               <Authorization>View & Not Edit</Authorization>
              </Group>
              <Group ID = 003>
                   <Authorization>Not View & Not Edit</Authorization>
              </Group>
        </AccessControlTemplate>
```

### 2.1.3 Deployment of service authorities

When deploying the service, the service deployer acquires the service authority description in the service description file of the personal calendar sharing service from the service warehouse (the service deployer needs to configure and deploy the service according to the deployment description in the service description file, and the present invention focuses on the deployment of service authorities).

```
              <ServiceAccessControlFacet>
                   <Group ID = 001>
                <Authorization>View & Edit</Authorization>
                   </Group>
                   <Group ID = 002>
                <Authorization>View & Not Edit</Authorization>
                   </Group>
                   <Group ID = 003>
                <Authorization>Not View & Not Edit</Authorization>
                   </Group>
              </ServiceAccessControlFacet>
```

The service deployer parses the XML-based service authority description to obtain a service authority list of the groups.

**Table 6**

| **Group ID** | **Service access authority (personal calendar sharing service)** |
|---|---|
| 001 | View & Edit |
| 002 | View & Not Edit |
| 003 | Not View & Not Edit |

The data structure of the service authority list may be in many forms. The service deployer sends a service authority deployment request to an access controller, and the access controller determines the validity of the request after receiving the request and returns a request response to the service deployer. If the request response returned by the access controller indicates that service authority deployment is permitted, the next step is that the service deployer sends the service access authority list in Table 6 to the access controller, and the access controller copies the service access authority list into an access strategy database thereof, and meanwhile, the database needs to store the service name (or any form of ID) corresponding to the list.

### 2.1.4 Access of service authorities

After creating and deploying the personal calendar sharing service, the service creator A notifies his/her friend service user B of the information about the service. If the service user B also wants to use the service, the service user B firstly subscribes to the service through a service subscriber. After subscribing to the service, the service user B needs to check his/her service authority through the access controller before accessing the service. The access process includes the following steps.
1. It is directly checked in the deployed service information whether authority description directly specific to the service user ID exists, and if authority description directly specific to the service user ID does not exist, the service user B sends a service access request to the access controller, and the access controller obtains the service user ID of the service user B from the access request, and sends a group information query request to the group management server to query which group of the service creator A the service user ID is in.
2. The group management server returns a response message, indicating that the service user ID of the service user B is in the group ID 002 of the service creator A. The access controller queries the access strategy database of the access controller and finds out that the service access authority of the group ID 002 is "View & Not Edit", that is, the group ID 002 is authorized to view but not to edit.
3. The access controller adds the found service access authority into the service access request of the service user B, and forwards the request to a service execution platform.
4. After receiving the forwarded service access request, the personal calendar sharing service operating on the service execution platform checks the service access authority in the service access request, and finds out that the service user B can only view but cannot edit the service, and thus permits the service user B to view the calendar, but shields the editing function.

### 2.2 Application Embodiment 2 of the present invention

A service creator A has recently established a company, and is the president of the company. With the rapid growth of the company, the service user A becomes busy with business affairs. During daily working hours, the service user A often needs to discuss about the future development and operating strategies with other executives in the company, and thus hopes to record his/her ideas or inspirations anytime and anywhere. In addition, because of work, the service creator A seldom stays together with his/her family members in daily life, and hopes to share the fun in life with his/her family members remotely.

Through a service creation platform, the service creator A creates a service The Big Thinker named by himself/herself. The service has two functions:
1) Idea Sharing: it is combined by a blog service and a short message notification service. The blog service allows the service user A to express his/her ideas about the operation and management of the company, and the other executives in the company can view these ideas and post comments. Once the blog is updated, the system automatically notifies the service creator A and the other executives in the company through short messages.
2) Family Life: it is combined by a presence service and a video call service. The service creator A can present his/her current state at any time for family members to view, and can, if desired, initiate a video call to share the fun in life.

### 2.2.1 Extraction of authority template and edition of service authorities

After editing The Big Thinker service, the service creator A needs to set service authorities. He/she hopes to set the following authorities for the groups:

**Table 7**

| **Group** | **Service access authority (The Big Thinker)** |
|---|---|
| Executives in the company | Idea Sharing |
| Family members | Family Life |
| Friends | Prohibited |
| Strangers | Prohibited |

Meanwhile, a friend service user D of the service creator A cares about the operation and management of the company very much, though he/she is not an executive in the company, and the service creator A also intends to set the service authority of the service user D as Idea Sharing.

**Table 8**

| **Group** | **Group ID** |
|---|---|
| Family members | 001 |
| Friends | 002 |
| Strangers | 003 |
| Executives in the company | 004 |

The service creator gives different service authorities to different group IDs.

**Table 9**

| **Group ID** | **Service access authority (The Big Thinker)** |
|---|---|
| 001 | Family Life |
| 002 | Prohibited |
| 003 | Prohibited |
| 004 | Idea Sharing |

The ID number of the service user D is 18732, and his/her service authority is as follows:

**Table 10**

| **Service user** | **ID Service access authority (The Big Thinker)** |
|---|---|
| 18732 | Idea Sharing |

The service creator A obtains a template MyAccessControlTemplate.xml from an authority template memory, as follows:

```
        <?xml version="1.0" encoding="UTF-8"?>
        <AccessControlTemplate>
              <Group ID = 001>
                   <Authorization>View & Edit</Authorization>
              </Group>
              <Group ID = 002>
                <Authorization>View & Not Edit</Authorization>
              </Group>
              <Group ID = 003>
        <Authorization>Not View & Not Edit</Authorization>
              </Group>
        </AccessControlTemplate>
```

The service creator A reedits the authority template according to Tables 7 and 8, as follows:

```
        <ServiceAccessControlFacet>
              <Group ID = 001>
               <Authorization>Family Life</Authorization>
              </Group>
              <Group ID = 002>
                <Authorization>Prohibited</Authorization>
              </Group>
              <Group ID = 003>
        <Authorization>Prohibited</Authorization>
              </Group>
        <Group ID = 004>
        <Authorization>Idea Sharing</Authorization>
              </Group>
              <User ID=18732>
                   <Authorization>Idea Sharing</Authorization>
              </User>
        </ServiceAccessControlFacet>
```

After editing the service authority, the system automatically incorporates the service authority into a service description file and stores the service description file into a service warehouse.

### 2.2.3 Deployment of service authorities

The deployment process in this embodiment is the same as that in the Embodiment 1.

### 2.2.4 Access of service authorities

The process of accessing The Big Thinker service by the service user D is as follows:
1. The service user D sends a service access request to an access controller, and the access controller obtains the service user ID (18732) of the service user D from the access request and queries whether authority setting directly specific to the ID exists in the service authorities deployed for The Big Thinker service.
2. The access controller finds out by querying that the service authority for the service user ID (18732) is Idea Sharing, and thus does not need to further query the group ID of the service user from a group management server, but directly adds the service authority into the service access request and forwards the service access request to a service execution platform.
3. After receiving the forwarded service access request, The Big Thinker service operating on the service execution platform checks the service access authority therein, and restricts the access of the service user D to the service according to the service authority.

A service user B is a friend of the service creator A, and his/her access process is different from that of the service user D.
1. The service user B sends a service access request to the access controller, and the access controller obtains the service user ID of the service user B from the access request and queries whether authority setting directly specific to the ID exists in the service authorities deployed for The Big Thinker service.
2. The access controller fails to directly find the service authority setting for the service user B from the service authorities, and thus sends a group information query request to the group management server to query which group of the service creator A the service user ID of the service user B is in.
3. The group management server returns a response message, indicating that the service user ID of the service user B is in the group ID 002 of the service creator A. The access controller queries according to the deployed service authorities and finds out that the service access authority of the group ID 002 is "Prohibited", that is, the group is prohibited from accessing the service.
4. The service access controller returns a response message to the service user B to notify the service user B that he/she is prohibited from accessing the service, and thus the service user B cannot access the service.

On a service creation platform oriented to service users, a service creator may create various new services by himself/herself. The present invention enables the service creator to set an access authority of a service while creating the service, and during the process, it needs to obtain the group IDs of corresponding service users from a group management server, and set the access authority of the service for each group ID. The service access authorities are described through XML and stored in a service description file (which further includes descriptions of other aspects of the service, for example, descriptions of service logic, service interface, and service deployment), and finally, the service description file is stored in a service warehouse.

When performing service authority deployment, the service deployer extracts the service authority description from the service warehouse, and automatically deploys the service authority description onto the access controller.

Therefore, the embodiments of the present invention generally can achieve the following beneficial effects:
Firstly, the present invention enables the service creator to flexibly set the access authority of the service according to the characteristics of the service by himself/herself while creating the service, without requiring a service administrator to set the access authority after deploying the service, which avoids the complexity of authority setting caused by a large number of services, and solves the privacy exposure problem of the service creator caused by the setting of the service authority by the service administrator.

Secondly, since the service authority set by the service creator is stored in the service warehouse in the form of the service description file, and is automatically deployed onto the access controller by the service deployer when the service authority is deployed, the conventional complex control process caused by the manual setting of the service authority by the service administrator is replaced, and the deployment time of the service authority is greatly reduced.

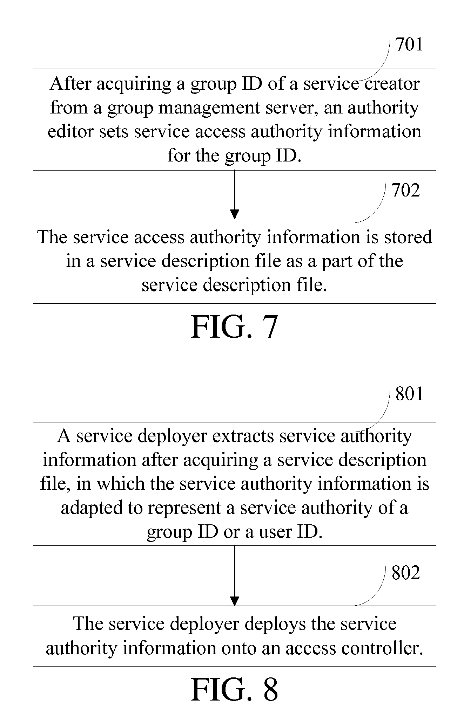

FIG. 7 is a flowchart of Embodiment 1 of a method for creating a service according to the present invention. Referring to FIG. 7, based on the introduction of the above accompanying drawings and the corresponding embodiments, this embodiment includes the following steps.

Step 701: After acquiring a group ID of a service creator from a group management server, an authority editor sets service access authority information for the group ID.

Step 702: The service access authority information is stored in a service description file as a part of the service description file.

Through the embodiment of the present invention, after acquiring a group ID of a service creator from a group management server, an authority editor sets service access authority information for the group ID; and the service access authority information is stored in a service description file as a part of the service description file. Thus, the following effects are achieved.

Firstly, the service access authority is preset by the service creator himself/herself through the authority editor, rather than by a system administrator as in the prior art.

Secondly, since the service access authority is preset by the service creator, the new requirements imposed by numerous service types and numerous service users at present are met.

Thirdly, the system administrator is relieved from the complex and heavy service authority setting work, so that the efficiency of service delivery and operation is improved.

Finally, the creation of the service access authority by the service creator himself/herself helps to protect the personal privacy of the combined service creator, and can attract more service users, thereby promoting the development of the service combination technology.

In the above embodiment, before the storing the service access authority information in the service description file as the part of the service description file, the method further includes:
directly setting, by the authority editor, the service access authority information for a user ID of a service user according the user ID.

In the above embodiment, before the storing the service access authority information in the service description file as the part of the service description file, the method further includes:
storing, by the authority editor, the service access authority information into an authority template memory as an authority template.

In the above embodiment, the setting the service access authority information further includes:
acquiring, by the authority editor, the authority template from the authority template memory; and
setting the service access authority information (for a group ID or the user) according to an access authority preset in the authority template.

In the above embodiment, the setting the service access authority information further includes:
permitting access of all service users.

In the above embodiment, if a plurality of authority templates is included, the authority templates are distinguished from each other by names.

In the above embodiment, the method further includes:
acquiring, by the authority editor, the authority template from the authority template memory; and
editing, by the authority editor, the service access authority information in the authority template.

In the above embodiment, the service description file is stored in a service warehouse.

FIG. 8 shows Embodiment 1 of a method for deploying a service according to the present invention corresponding to the embodiment of creating a service, which includes the following steps.

Step 801: A service deployer extracts service authority information after acquiring a service description file, where the service authority information is used for representing a service authority of a group ID or a user ID.

Step 802: The service deployer deploys the service authority information onto an access controller.

Through the embodiment of the present invention, a service deployer extracts service authority information after acquiring a service description file, where the service authority information is used for representing a service authority of a group ID or a user ID; and the service deployer deploys the service authority information onto an access controller. Thus, the following effects are achieved.

Firstly, after the service creator presets the service access authority by himself/herself, the service deployer automatically and rapidly deploys the services onto the access controller in batches so as to perform service access control, so that the new requirements imposed by numerous service types and numerous service users at present are met.

Secondly, the system administrator is relieved from the complex and heavy service authority setting work, so that the efficiency of service delivery and operation is improved.

Finally, the creation of the service access authority by the service creator himself/herself helps to protect the personal privacy of the combined service creator, and can attract more service users, thereby promoting the development of the service combination technology.

In the above embodiment, the acquiring further includes:
acquiring, by the service deployer, the service description file from a service warehouse.

In the above embodiment, before the deploying, by the service deployer, the service authority onto the access controller, the method further includes:
if a service authority format already existing in the access controller is consistent with a service authority format extracted from the service description file, directly performing the deploying step; and
if the service authority format already existing in the access controller is not consistent with the service authority format extracted from the service description file, converting the service authority format extracted from the service description file into a service authority format consistent with the format of the access controller, and then performing the deploying step.

In the above embodiment, after the deploying step, the method further includes:
acquiring, by the access controller, service authority information of a group ID to which the service user belongs after receiving an access request of the service user; and
controlling, by the access controller, the service access of the service user according to the service authority information.

In the above embodiment, before the acquiring, by the access controller, the service authority information of the group ID to which the service user belongs after receiving the access request of the service user, the method further includes:
acquiring, by the access controller, a user ID of the service user, and sending the user ID to a group management server; and
receiving a group ID to which the user ID belongs sent by the group management server.

In the above embodiment, after receiving the access request of the service user, if the access request of service user carries ID of the group to which the service user belongs, the acquiring, by the access controller, the service authority information of the group ID to which the service user belongs is performed.

In the above embodiment, after the deploying step, the method further includes:
after receiving the access request of the service user, if the service authority information of the access controller already contains the user ID of the service user, controlling the access of the service user according to the service authority information.

In the above embodiment, after the deploying step, the method further includes:
after receiving the access request of the service user, if the service authority information of the access controller does not contain the user ID of the service user, sending the user ID to the group management server;
acquiring the service authority information of the group ID according to the group ID returned by the group management server; and
controlling, by the access controller, the access of the service user according to the service authority information of the group ID.

In the above embodiment, after the deploying step, the method further includes:
sending, by the service user, a service subscription request to a service subscriber; and returning, by the service subscriber, a service subscription result.

Corresponding to the above embodiment of the method for creating a service, the present invention provides Embodiment 1 of a device for creating a service, where the device includes an authority editor, a group management server and a service warehouse.

The authority editor is configured to set service access authority information for a group ID of a service creator after acquiring the group ID from the group management server.

The group management server is configured to manage the group ID.

The service warehouse is configured to store the service access authority information in a service description file as a part of the service description file.

This embodiment has the advantages corresponding to the embodiment of the method for creating a service, and the details will not be described herein again.

In the above embodiment, the authority editor is further configured to directly set service access authority information for a user ID according to the user ID.

In the above embodiment, the device further includes:
an authority template memory, configured to store an authority template.

In the above embodiment, the device further includes:
an authority template memory, configured to store an authority template to be acquired by the authority editor;
where the authority editor sets the service access authority information according to an access authority preset in the authority template.

In the above embodiment, if a plurality of authority templates is included, the authority templates are distinguished from each other by names.

In the above embodiment, the authority editor is further configured to acquire the authority template from the authority template memory, and edit the service access authority information in the authority template.

In the above embodiment, the service warehouse further includes:
a service interface description, and/or
a service logic description.

Corresponding to the above embodiment of the method for deploying a service, the present invention provides Embodiment 1 of a device for deploying a service, where the device includes:
a service deployer, configured to extract service authority information after acquiring a service description file from a service warehouse, where the service authority information is used for representing a service authority of a group ID or a user ID; and
an access controller, configured to accept the service authority information deployed by the service deployer.

This embodiment has the advantages corresponding to the embodiment of the method for deploying a service, and the details will not be described herein again.

In the above embodiment, if a service authority format already existing in the access controller is consistent with a service authority format extracted from the service description file, the service deployer directly performs service authority deployment.

If the service authority format already existing in the access controller is not consistent with the service authority format extracted from the service description file, the service authority format extracted from the service description file is converted into a service authority format consistent with the format of the access controller, and then the service deployer performs service authority deployment.

In the above embodiment, the service access controller is further configured to: acquire service authority information of a group ID to which the service user belongs after receiving an access request of the service user; and
control the service access of the service user according to the service authority information.

In the above embodiment, the device further includes:
a group management server, configured to acquire a group ID to which a user ID belongs according to the user ID;
where before the access controller acquires the service authority information of the group ID to which the service user belongs after receiving the access request of the service user, the access controller is further configured to:
acquire the user ID of the service user, and send the user ID to the group management server; and
receive a group ID to which the user ID belongs sent by the group management server.

In the above embodiment, the access controller is further configured to:
after receiving the access request of the service user, if the service user carries the group ID thereof, perform the acquiring, by the access controller, the service authority information of the group ID to which the service user belongs.

In the above embodiment, the access controller is further configured to:
after receiving the access request of the service user, if the service authority information of the access controller already contains the user ID of the service user, control the access of the service user according to the service authority information.

In the above embodiment, the device further includes:
a group management server, configured to acquire a group ID to which a user ID belongs according to the user ID;
where the access controller is further configured to:
after receiving the access request of the service user, if the service authority information of the access controller does not contain the user ID of the service user, send the user ID to the group management server;
acquire the service authority information of the group ID according to the group ID returned by the group management server; and
control the access of the service user according to the service authority information of the group ID.

In the above embodiment, the device further includes:
a service subscriber, configured to return a service subscription result after receiving a service subscription request sent by a service user.

In the above embodiment, the device further includes:
a service execution platform, for the service user to execute an access request for a service on the service execution platform if the access controller permits the service user to access the service.

Through the embodiments of the present invention, the following effects can be achieved.

Firstly, the service access authority is preset by the service creator himself/herself through the authority editor, rather than by the system administrator as in the prior art.

Secondly, since the service access authority is preset by the service creator, the new requirements imposed by numerous service types and numerous service users at present are met.

Thirdly, the system administrator is relieved from the complex and heavy service authority setting work, so that the efficiency of service delivery and operation is improved.

Finally, the creation of the service access authority by the service creator himself/herself helps to protect the personal privacy of the combined service creator, and can attract more service users, thereby promoting the development of the service combination technology.

The processes of the device embodiments of the present invention are similar to those of the method embodiments, so the details will not be described herein again. It should be noted that, the protection scope of the present invention is not limited to the specific module implementation of the above embodiments. The module functions may also be divided in other forms by applying the core ideas of the present invention, which is well known to persons skilled in the art.

Likewise, the embodiments of the present invention may also be applied to various forms of networks including intelligent networks, Internet, mobile networks and local area networks, and the methods and devices of the present invention can be applied as long as the network can perform service creation and service access control.

Through the above description of the embodiments, it is apparent to persons skilled in the art that the present invention may be accomplished by software on a necessary universal hardware platform, and definitely may also be accomplished by hardware, but in most cases, the present invention is preferably implemented through the former method. Therefore, the technical solution of the present invention or the part that makes contributions to the prior art can be substantially embodied in the form of a software product. The computer software product is stored in a storage medium, and contains several instructions for instructing computer equipment (for example, a personal computer, a server, or network equipment) to perform the method according to the embodiments of the present invention.

The above embodiments of the present invention are not intended to limit the protection scope of the technical solution. Any modification, equivalent replacement, and improvement made without departing from the principle of the above embodiments shall fall within the protection scope of the present invention.

## Claims

1. A method for creating a service, comprising:
setting service access authority information for a service user; and
storing the service access authority information in a service description file as a part of the service description file.

2. The method according to claim 1, wherein the setting the service access authority information for the service user comprises:
acquiring a group ID of the service user from a group management server, and setting the service access authority information for the group ID; and/or
directly setting the service access authority information for a user ID of the service user.

3. The method according to claim 1, wherein before the storing the service access authority information in the service description file as the part of the service description file, the method further comprises:
storing the service access authority information as an authority template.

4. The method according to claim 1 or 2, wherein the setting the service access authority information further comprises:
acquiring an authority template from an authority template memory; and
setting the service access authority information according to an access authority preset in the authority template.

5. The method according to claim 3, wherein if a plurality of authority templates exists, the authority templates are distinguished from each other by names.

6. The method according to claim 3, further comprising:
acquiring the authority template from the authority template memory; and editing the service access authority information in the authority template.

7. A method for deploying a service, comprising:
acquiring a service description file, and extracting service access authority information from the service description file, wherein the service access authority information is used for representing a service access authority of a service user; and
deploying the service access authority information onto an access controller.

8. The method according to claim 7, wherein if a service access authority format already existing in the access controller is not consistent with a service access authority format extracted from the service description file, before the deploying the service access authority information onto the access controller, the method further comprises:
converting the service access authority format extracted from the service description file into a service access authority format consistent with the format of the access controller.

9. The method according to claim 7, wherein after the deploying the service access authority information onto the access controller, the method further comprises:
acquiring, by the access controller, the service authority information of the service user after receiving an access request of the service user; and
controlling, by the access controller, the service access of the service user according to the service authority information.

10. The method according to claim 9, wherein the service access authority information is used to representing a service access authority of a group ID of the service user; and the acquiring, by the access controller, the service access authority information of the service user comprises:
acquiring, by the access controller, the service access authority information of the service user by acquiring the service access authority information of the group ID to which the service user belongs.

11. The method according to claim 10, wherein the acquiring the service access authority information of the group ID to which the service user belongs comprises:
acquiring, by the access controller, a user ID of the service user, and sending the user ID to a group management server;
receiving a group ID to which the user ID belongs sent by the group management server; and
acquiring the service access authority information of the group ID.

12. The method according to claim 10, wherein if the access request of the service user carries ID of the group to which the service user belongs, the acquiring the service access authority information of the group ID to which the service user belongs comprises:
performing the acquiring, by the access controller, the service authority information of the group ID to which the service user belongs.

13. The method according to claim 9, wherein the service access authority information is used for representing a service access authority of a user ID of the service user; and the acquiring, by the access controller, the service authority information of the service user comprises:
acquiring, by the access controller, the service access authority information of the service user by acquiring the service access authority information of the user ID of the service user.

14. The method according to claim 9, wherein the service access authority information is used for representing a service access authority of a group ID or a user ID of the service user; and the acquiring, by the access controller, the service authority information of the service user comprises:
acquiring, by the access controller, the service access authority information of the service user by acquiring the service access authority information of the user ID of the service user;
sending the user ID to a group management server if the service access authority information of the user ID of the service user is not acquired;
acquiring the service authority information of the group ID according to the group ID returned by the group management server; and
controlling, by the access controller, the access of the service user according to the service authority information of the group ID.

15. The method according to claim 7, wherein after the deploying step, the method further comprises:
sending, by the service user, a service subscription request to a service subscriber; and
returning, by the service subscriber, a service subscription result.

16. A device for creating a service, comprising an authority editor and a service warehouse, wherein
the authority editor is configured to set service access authority information for a service user; and
the service warehouse is configured to store the service access authority information in a service description file as a part of the service description file.

17. The device according to claim 16, further comprising:
a group management server, configured to manage a group ID;
wherein the authority editor is specifically configured to acquire a group ID of the service user from the group management server, and set the service access authority information for the group ID; and/or, directly set the service access authority information for a user ID of the service user.

18. The device according to claim 17, further comprising:
an authority template memory, configured to store the service access authority information as an authority template.

19. The device according to claim 16 or 17, further comprising:
an authority template memory, configured to store an authority template;
wherein the authority editor sets the service access authority information according to an access authority preset in the authority template.

20. The device according to claim 18, wherein if a plurality of authority templates exist, the authority templates are distinguished from each other by names.

21. The device according to claim 18, wherein the authority editor is further configured to acquire the authority template from the authority template memory, and edit the service access authority information in the authority template.

22. The device according to claim 16, wherein the service warehouse further comprises:
a service interface description, and/or a service logic description.

23. A device for deploying a service, comprising:
a service deployer, configured to acquire a service description file from a service warehouse, and extract service access authority information from the service description file, wherein the service access authority information is used for representing a service access authority of a service user; and
an access controller, configured to accept the service access authority information deployed by the service deployer.

24. The device according to claim 23, wherein if a service authority format already existing in the access controller is consistent with a service authority format extracted from the service description file, the service deployer directly performs service authority deployment; and
if the service authority format already existing in the access controller is not consistent with the service authority format extracted from the service description file, the service authority format extracted from the service description file is converted into a service authority format consistent with the format of the access controller, and then the service deployer performs service authority deployment.

25. The device according to claim 23, wherein the service access controller is further configured to:
acquire the service authority information of the service user after receiving an access request of the service user; and
control the service access of the service user according to the service authority information.

26. The device according to claim 23, further comprising:
a group management server, configured to acquire a group ID to which a user ID belongs according to the user ID, wherein the service access authority information is used for representing a service access authority of a group ID of the service user; and
the access controller is further configured to acquire the service access authority information of the service user by acquiring the service access authority information of the group ID to which the service user belongs.

27. The device according to claim 26, wherein the access controller is further configured to:
acquire the user ID of the service user, and send the user ID to the group management server;
receive a group ID to which the user ID belongs sent by the group management server; and
acquire the service access authority information of the group ID.

28. The device according to claim 26, wherein if the service user carries the group ID thereof, the access controller is further configured to:
perform the acquiring, by the access controller, the service authority information of the group ID to which the service user belongs.

29. The method according to claim 25, wherein the service access authority information is used for representing a service access authority of a user ID of the service user; and the access controller is further configured to:
acquire the service access authority information of the service user by acquiring the service access authority information of the user ID of the service user.

30. The device according to claim 25, further comprising:
a group management server, configured to acquire a group ID to which a user ID belongs according to the user ID;
wherein the service access authority information is used for representing a service access authority of a group ID or a user ID of the service user; and
the access controller is specifically configured to:
acquire the service access authority information of the service user by acquiring the service access authority information of the user ID of the service user;
send the user ID to the group management server if the service access authority information of the user ID of the service user is not acquired;
acquire the service authority information of the group ID according to the group ID returned by the group management server; and
control the access of the service user according to the service authority information of the group ID.

31. The device according to claim 23, further comprising:
a service subscriber, configured to return a service subscription result after receiving a service subscription request sent by a service user.

32. The device according to any one of claims 25 to 30, further comprising:
a service execution platform, for the service user to execute an access request for a service on the service execution platform if the access controller permits the service user to access the service.
